# EUROPEAN PATENT APPLICATION

(11) **EP 2 298 716 A2**
(43) Date of publication of application: **23.03.2011**
(21) Application number: 10174763.2
(22) Date of filing: 31.08.2010
(51) Int. Cl.: C04B 35/83

(54) **Methods of rapidly densifying complex-shaped, asymmetrical porous structures**

(30) Priority: 16.09.2009 US 560888
(71) Applicant: Honeywell International Inc., Morristown, NJ 07962 (US)
(72) Inventor: Golecki, Ilan, Morristown, NJ 07962-2245 (US)
(74) Representative: Buckley, Guy Julian

(57) **Abstract**

Method (100)s of densifying a complex-shaped and/or asymmetrical porous structure include providing a porous structure having such shape, connecting at least two regions of the porous structure with an electrically-conductive element (3, 12) to form a continuous electrically-conductive assembly to enable non-contact electromagnetic coupling between the porous structure and an induction coil (5, 14), establishing a thermal gradient from an inner region of the porous structure to an outer surface region thereof, where the inner region is at a temperature that is initially higher than a temperature of the outer surface region and that causes decomposition of a compound to effect deposition of a solid derived from the decomposition of the compound on and within the inner porous region, exposing the porous structure to the gaseous compound to effect deposition of the solid within the porous structure, and continuing the steps of establishing and exposing until the porous structure has a predetermined mass or density.

## Description

### TECHNICAL FIELD

The inventive subject matter generally relates to densification of porous structures and more particularly relates to methods of rapid densification of multiple porous structures having complex and/or asymmetrical shapes.

### BACKGROUND

Inorganic fiber-matrix composite materials, such as carbon-carbon (C-C) composites, offer advantages of light weight and good mechanical and thermal properties for a variety of aerospace and other applications, such as for brake pads, uncooled engine and other aircraft parts, missile parts, and furnace heaters and fixtures. One of the most common fabrication methods of such composite structures involves densification by means of chemical vapor deposition (CVD) and infiltration (CVI). It is well known that the densification of porous parts thicker than about 2.5 cm (1 inch) using conventional isothermal, isobaric CVI and/or liquid resin impregnation and thermal annealing are very long, laborious, and multi-cycle processes which may take 1 to 7 months.

U.S. Patent No. 5,348,774 (to Golecki, Morris and Narasimhan), incorporated herein by reference, described an effective, single-step method of reducing the densification times of multiple thick, porous preforms by one to two orders of magnitude. The method used electromagnetic induction to simultaneously heat multiple porous preforms positioned within a water-cooled induction coil in a reactor having water-cooled walls to create a thermal gradient from interior regions of each preform to external surface regions of each preform in a manner resulting in significantly higher temperatures in the interior regions. The temperatures in the interior regions at initiation of densification were much higher than temperatures used in conventional isothermal isobaric CVI (e.g. higher by 100° C to about 200° C). Because the thermal decomposition rates of the precursor and the coating deposition rates increase exponentially with temperature in an Arrhenius fashion, the densification of such preforms proceeded from the hotter interior regions outwardly, thereby allowing much higher carbon deposition rates without premature surface crusting. In this method, disk-shaped preforms each having a central hole were positioned around either an electrically-conducting or an electrically-insulating central mandrel, as described in I. Golecki, R.C. Morris, D. Narasimhan and N. Clements, Appl. Phys. Lett., Vol. 66, pp. 2334-2336 (1995) (APL paper). The ability to create such an inverted thermal gradient within each preform relied on several factors, including circulating induced currents heating the preform material via Joule heating, and radiative cooling of at least a portion of the external surfaces of the preforms having a direct view of the cooled copper coil and cooled chamber walls.

The rapid densification in the same reactor of a right solid carbon fibrous hexagon having a diagonal span of 8.6 cm (3.4 inches) and a thickness of 5.6 cm (2.2 inches) and having no central or other macroscopic hole by the above inductively-heated thermal gradient CVI method was described by Ilan Golecki and Dave Narasimhan, Proc. 25th Annual Conf. on Composites, Advanced Ceramics, Materials and Structures, American Ceramic Society, Cocoa Beach, FL, January 2001, M. Singh and T. Jessen, eds., Ceramic Engineering & Science Proc., Vol. 22, Issue No. 3, pp. 103-114 (2001). The aforementioned rapid and simple densification method can be used with any porous material which, in a range of temperatures appropriate for densification, has sufficient electrical conductivity to electromagnetically couple to an induction coil. Examples of such porous materials include porous carbon fiber preforms and other porous carbon-based structures, such as mats. Other examples include porous silicon-carbide-fiber-based preforms. However, the aforementioned rapid densification method applied primarily to relatively simple-shaped preforms, such as discs, cylinders, tubes, solids of revolution, and polygons, which can be readily stacked and/or positioned in multiple numbers centrally within an induction coil having a relatively simple shape, e.g. a cylindrical coil, for heating and densification in a reactor. Such simple-shaped preforms are encountered for example, in brake pads for airplanes and racing cars, and in outer structures of simple-shaped, e.g., cylindrical or conical, missiles.

Though relatively simple-shaped preforms as described above may be adequately densified by the aforementioned processes, a more complex-shaped, planar or non-planar, asymmetrical preform would not be amenable to be densified using the aforementioned processes. For example, a single, planar, rectangular porous plate with an arbitrary ratio of side lengths and a thickness of about 2.5 cm (1 inch) could be placed in-between two opposing pancake-induction-coils and heated as described by induction to create an insideout thermal gradient to be rapidly densified. However, a plurality of such rectangular plates may not be readily amenable to be densified simultaneously and rapidly in large quantities. Specifically, densifying a plurality of planar, rectangular plates may entail a much more complex and much more costly arrangement than densifying a stack of circular disks. For example, a series of separate sets of pancake coils (two coils per plate), or a rectangular, or another shaped coil, depending on the specific plate geometry, could individually surround each rectangular plate. In the case of an even more complex-shaped, planar or non-planar, asymmetrical preform, such a preform may not be amenable to be densified in this manner. If such non-planar preforms were placed between two opposing pancake-type coils, very complex-shaped coils may need to be used and, additionally, multiple preforms of this type may not be easily amenable for simultaneous densification in this manner.

As an alternative to the aforementioned densification processes, components having regions thicker than about 2.5 cm (1 inch) may comprise many individual, much thinner layers, where each layer is first individually densified and then the layers are attached together. However, the final mechanical strength, and especially interlaminar tensile and shear strengths of a thus assembled, thicker component, may be lower than desired and lower than those of a single part having an entire-thickness that has been densified as one integral part. Attachment of fiber-matrix composite parts using adhesive layers, or bolts, for example, is generally less preferred than having one continuous part, because attachment may add complexity, time and cost, and may result in degraded mechanical and other properties.

Therefore, there is a need for effective and practical methods to simultaneously densify multiple complex-shaped, planar or non-planar, asymmetrical, and/or non-circularly-symmetric porous structures. It is desirable to have improved and relatively rapid densification methods for the aforementioned structures where at least one structure may include at least one region possessing a thickness greater than approximately 2.5 cm (1 inch). It is further desirable for the improved densification method to enable such structures to reach functional densities relatively rapidly, i.e. in a matter of hours to days rather than weeks to months. Moreover, it is desirable for the method to be relatively simple and to employ relatively simple and/or inexpensive components, such as induction coils, and as few of these components as possible, preferably only one coil per set of porous structures. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

Methods of densifying a complex-shaped and/or asymmetrical porous structure and methods of simultaneously densifying more than one complex-shaped and/or asymmetrical porous structures are provided.

In an embodiment, by way of example only, a method of densifying a complex-shaped and/or asymmetrical porous structure comprises the steps of providing a porous structure having a complex and/or asymmetrical shape, connecting at least two regions of the porous structure with an electrically-conductive element to form a continuous electrically-conductive assembly in a manner to enable non-contact electromagnetic coupling between the porous structure and an induction coil, establishing a thermal gradient from at least one inner region of the porous structure to at least one outer surface region of the porous structure, where the inner region is at a temperature that is initially higher than a temperature of the outer surface region, and the temperature in the inner region causes decomposition of a gaseous compound so as to effect deposition of a solid derived from the decomposition of the compound within and onto the inner porous region, exposing the porous structure to the gaseous compound to effect deposition of the solid within the porous structure of the continuous electrically-conductive assembly, and continuing the steps of establishing and exposing until the porous structure has a predetermined mass or density.

In another embodiment, by way of example only, a method of simultaneously densifying more than one complex-shaped and/or asymmetrical porous structure comprises the steps of providing a first porous structure having a complex and/or asymmetrical shape, providing a second porous structure having a complex and/or asymmetrical shape, connecting at least a first region of the first porous structure to at least a first region of the second porous structure with an electrically-conductive element, connecting at least a second region of the first porous structure to at least a second region of the second porous structure with an electrically-conductive element to form a continuous electrically-conductive assembly and to enable non-contact electromagnetic coupling between each of the first porous structure and an induction coil and the second porous structure, and the same induction coil, establishing a thermal gradient from at least one inner region of each of the first porous structure and the second porous structure to at least one corresponding outer surface region of each of the first porous structure and the second porous structure, where the inner region is at a temperature that is initially higher than a temperature of the outer surface region, and the temperature in the inner region causes decomposition of a gaseous compound to effect deposition of a solid derived from the decomposition of the gaseous compound within and onto the inner porous region, exposing the porous structures to the gaseous compound to effect deposition of the solid within the porous structures of the continuous electrically-conductive assembly, and continuing the steps of establishing and exposing until the first and the second porous structures each has a predetermined mass or density.

### BRIEF DESCRIPTION OF THE DRAWINGS

The inventive subject matter will hereinafter be described in conjunction with the following drawing figures, wherein like numerals denote like elements.

FIG. 1 is a simplified process flow diagram of a method of rapidly densifying complex-shaped and/or asymmetrical porous structures, according to an embodiment;

FIG. 2 is a simplified, cross-sectional view of a continuous electrically-conductive assembly of porous structures, according to an embodiment; and

FIG. 3 is a simplified, cross-sectional view of a continuous electrically-conductive assembly of porous structures, according to another embodiment.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description. The inventive subject matter describes a novel and non-obvious method of using electromagnetic induction heating to create an inverted thermal gradient within, and resulting in rapid densification of complex-shaped, planar or non-planar, asymmetrical porous structures, and especially such structures which have regions thicker than about 2.5 cm (1 inch), which would, as noted, be very hard and time consuming to densify by conventional methods.

The method may be used on porous structures including carbon fiber preform panels and parts used in various structural and other applications. Other examples of porous structures include silicon-carbide-fiber-based preforms. The structures may be used to form components for various airborne vehicles, such as manned and unmanned aircraft and missiles, as well as for fixtures or heaters in high temperature furnaces. Such structures and components may have very complex and/or asymmetrical geometrical shapes. Examples of complex and/or asymmetrical geometrical shapes include various plates including triangular and rectangular plates, V-, U-, L-, I-, J- H-, T-, and C-shaped sections, various airfoils, sailshaped parts, and the like. Additionally, each structure may incorporate a number of regions having a wide range of thicknesses, including regions thicker than about 2.5 cm (1 inch), in an embodiment. Other structures may have regions that are thicker than about 7.6 cm (3 inches), in other embodiments. In general terms, the method includes combining individual, non-circularly symmetrical or non-continuously-polygonal preforms into one or more electrically-continuous assemblies within an induction coil, for example by positioning such preforms around a central axis and contacting each preform to at least one adjacent preform with at least one electrically conducting part, e.g. a carbon fiber tow, carbon fabric, carbon mat, porous fibrous carbon element, or a piece of graphite, in a manner to enable induction currents to flow continuously within the assembly of such preforms, and thereby enable rapid, inside out densification of each preform.

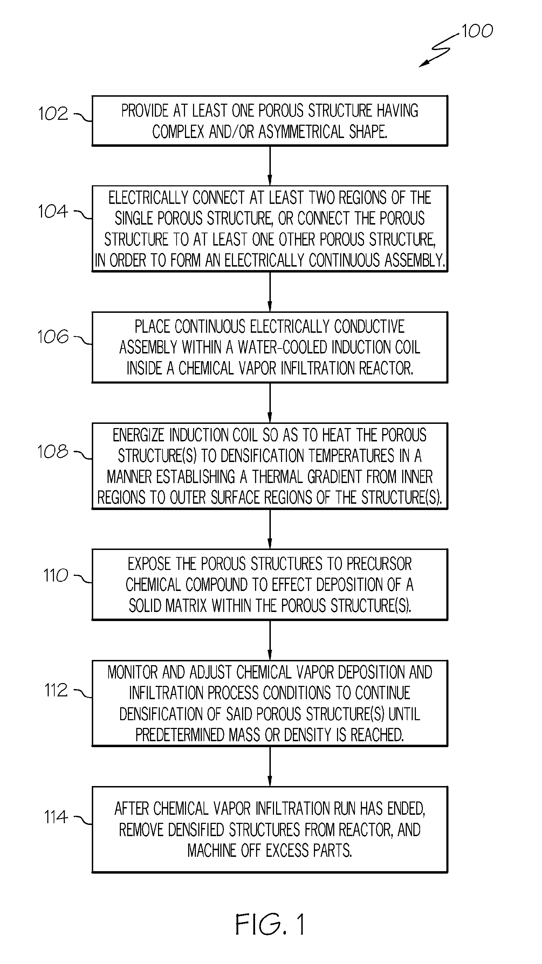

FIG. 1 is a simplified flow diagram of a method 100 of densifying porous structures, according to an embodiment. In an embodiment, the method 100 includes providing one or more porous structures having a complex and/or asymmetrical shape, step 102. In an embodiment, each porous structure may comprise an electrically-conductive material and the complex and/or asymmetrical geometric shape may be selected from a shape that is described above. "Electrically conductive" as used herein in connection with a porous structure may be defined as being sufficiently electrically conductive to enable the material of the porous structure to couple electromagnetically to an induction coil over a range of temperatures appropriate for densification from the vapor phase. In accordance with an embodiment, examples of suitable electrically-conductive materials for the porous structures include, but are not limited to carbon, silicon carbide (SiC), and the like. In an embodiment, the porous structure, if made of carbon, may have an initial density in a range of about 0.2 g/cm³ to about 1.2 g/cm³. In other embodiments, the initial density may be less or greater than the aforementioned range. In some instances, the porous structures may first undergo a rigidization process, prior to full densification. For example, the porous structures may be first infiltrated with a thin carbon or SiC coating by means of conventional, isothermal, isobaric chemical vapor infiltration (CVI). The coating may have a thickness in a range of about 0.1 micrometer to about 1.0 micrometer, in an embodiment. In other embodiments, the thickness of the coating may be greater or less than the aforementioned range. Rigidization may assist the porous structures to be more self-supporting and therefore to require less fixturing during full densification. Other rigidization methods may include infiltration with a liquid carbon or SiC precursor, such as liquid phenolic or pitch, or liquid pre-ceramic polysilazane, followed by an annealing in an oxidant-free ambient to remove the organic parts of the liquid precursors.

The one or more porous structures are electrically connected to form a continuous electrically-conductive assembly to enable non-contact electromagnetic coupling between the continuous electrically-conductive assembly and an induction coil, step 104. In an embodiment, at least two regions of a porous structure are electrically connected to form the continuous electrically-conducive assembly. In another embodiment, one porous structure is electrically connected to at least one other porous structure, in order to form the continuous electrically-conducive assembly. In an embodiment, the porous structures may be arranged into the continuous electrically-conductive assembly.

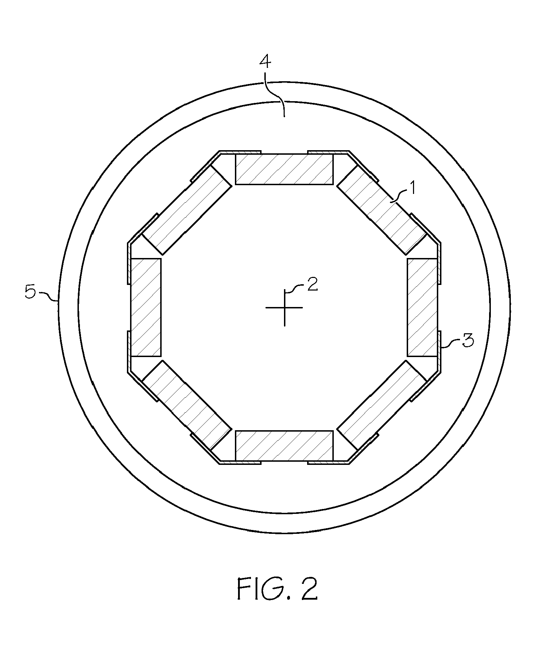

FIG. 2 is a simplified, cross-sectional view of a continuous electrically-conductive assembly, according to an embodiment. Specifically, FIG. 2 shows a simplified, cross-sectional view of an assembly where the porous structures comprise rectangular, planar porous preform plates 1 arranged around a central axis 2. According to an embodiment, the plates 1 may include a set of eight substantially identical plates, as shown in FIG. 2. In other embodiments, more or fewer plates may be included. The plates 1 may have substantially identical dimensions or one or more may be different in dimensions than the others. In an embodiment, each plate 1 could be positioned on one edge, for instance the shorter edge, in a manner such that the eight plates form an approximate octagon around the central axis 2.

Each plate 1 is connected electrically to two adjacent plates 1 to form a continuous electrically-conductive assembly and electrical path 4. In an embodiment, the electrical connection may be formed using an electrically-conductive element 3 attached between at least two adjacent plates 1, such that all of the plates are in continuous electrical contact. The electrically-conductive element 3 may or may not comprise material that is substantially identical to that of the porous structure (e.g., plates 1). Examples of suitable materials include, but are not limited to carbon-based materials, such as carbon fiber tow, carbon fabric, carbon mat, porous fibrous carbon element, graphite, carbon-carbon composite, and noble metals that have properties that are compatible with a CVI environment.

The electrically-conductive element 3 may have a configuration that is suitable for connecting to the ends of one or more porous structures to form an electrically continuous shape. In one embodiment, the electrically-conductive element 3 may be glued to the porous structures by means of a graphite-based cement, and if necessary, the glued composite may be annealed to consolidate and stabilize the cement and ensure an electrical contact. In another embodiment, the electrically-conductive element 3 may be stitched to the porous structures. In yet another embodiment, the electrically-conductive element 3 may be mechanically fastened to the porous structures. The electrically-conductive element 3 may include one or several carbon tows or pieces of fabric, in an embodiment.

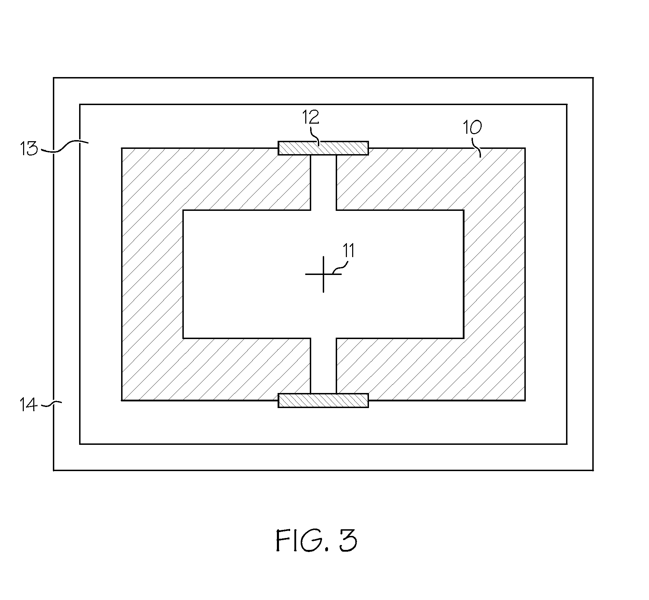

By arranging the porous structures into an electrically interconnected assembly, the assembly essentially acts as a plurality of electrical resistors connected in series, including the case when electricity is provided to the assembly. The electrical resistance, mechanical properties, composition, shape and other properties of the electrically-conductive interconnecting elements 3 in FIG. 2 and electrically-conductive interconnecting elements 12 in FIG. 3 can be varied, as long as a sufficient electrical continuity and conductivity between the porous structures is maintained when subjected to the densification temperatures and as long as the electrically-conductive elements are chosen to be compatible with the environment throughout the densification process.

Returning to FIG. 1, the continuous electrically-conductive assembly is placed within and surrounded by a water-cooled induction coil within a water-cooled, chemical vapor deposition (CVD) and infiltration (CVI) reactor, to enable rapid densification of the porous plates by decomposition of a suitable gaseous chemical compound, step 106. With continued reference to FIG. 2, the induction coil 5 may have a shape that corresponds with an outer diameter shape of the assembly, in an embodiment. For example, the induction coil 5 may be octagonal in shape. In another embodiment, the induction coil 5 can be circular in shape or may have another polygonal shape. Fixtures may be used to position the continuous electrically-conductive assembly centrally within the coil 5. A plurality of the electrically connected porous structures may be stacked and positioned within and along the length of the coil 5, in an embodiment. As required, fixtures may be used to position the plurality of the stacked porous structures at desired distances from one another within the coil 5. The distances between adjacent porous structures along the central axis 2 may be selected based on the shapes and dimensions of the porous structures and on the configuration of precursor inlets, gas showers, flow channelers, and the like within the reactor, to enable the precursor gas to flow over substantially all of the external surfaces of the porous structures.

Moreover, although shown as being positioned vertically, the central axis 2 may be tilted at another angle between 0 and 90 degrees with respect to either a reference plane in the densification reactor or in a facility housing the reactor (e.g. a floor), in other embodiments. Also, the densification reactor may have any suitable shape and volume and may be positioned at any suitable angle with respect to the reference plane. Considerations for selecting specific spatial orientations for the central axis 2 and/or the densification reactor may include the types, shapes, dimensions and number of porous preforms to be densified, type of facility, and ease or convenience of loading and unloading of porous preforms prior to and after densification. Optionally, additional fixturing may be used to connect the continuous electrically-conductive assembly to a rotary feedthrough and/or to a linear motion feedthrough. The feedthroughs may be employed to enable rotation of and/or translation of the continuous electrically-conductive assembly within the induction coil 5 during densification.

The densification reactor is not limited in any way, except as already described. In general, the reactor will include an enclosure or chamber, at least an inner wall of which is cooled and such inner wall facing at least some of the external surfaces of the porous structures undergoing densification. The dimensions of the reactor chamber is not limited in any way, and can be in the case of a generally cylindrically shaped chamber, for example, approximately 40 cm in diameter by about 100 cm in height, or in another example, 40 m in diameter by 100 m high. The densification chamber is usually preferably made of metal, such as steel or stainless steel. This chamber is usually connected to a supply of gases, which typically include an inert gas, such as argon or nitrogen, air, and at least one CVD/CVI precursor, for example cyclopentane, propane or methane in the case of carbon deposition and infiltration. For operation at subatmospheric pressure, as well as for ease and better control of the gas present in the chamber, means of pumping gases out, such as at least one vacuum pump, is connected to the chamber.

To accommodate one or more continuous electrically-conductive assemblies comprising a large number of preforms, and/or preforms of relatively large sizes, the densification reactor may include multiple precursor inlets, and possibly gas showers and gas channeling fixtures within the densification chamber, where some or all of the gas showers or gas channeling fixtures may be heated to predetermined temperatures, in order to ensure a uniform distribution of precursor at appropriate temperatures to all the preforms and across substantially all regions of each preform. An example of a precursor channeling method and hardware is described in U.S. Patent No. 5,348,774 and in the above-noted APL paper, incorporated herein by reference. Pressure inside the densification chamber can be measured by any number of known means, including absolute diaphragm-type pressure gauges, and the pressure can be controlled by any number of known means, such as throttle valves and associated controllers, pumps with controlled pumping speeds, and the like. Temperatures of various fixtures and elements and of various regions within the densifying preforms inside the reactor can be measured by means of thermocouples and/or pyrometrically.

The densification chamber typically encloses the induction coil. For example, the induction coil may be a water-cooled copper coil. In other embodiments, the induction coil can be located outside of and may surround the densification chamber, provided that the walls of the chamber are non-electrically conducting to avoid substantial electromagnetic coupling of the chamber walls to the coil. An example of the latter arrangement would include a densification chamber having quartz walls. For practical reasons, the chamber walls are made of metal, for example, steel or stainless steel, and in this case the coil is located inside the chamber. The shape and other specifications of the induction coil will depend on the types, shapes, dimensions and number of porous preforms to be densified. Typical cross-sectional shapes of the induction coil comprise circular, elliptical and polygonal. Typical three-dimensional shapes of the induction coil comprise right cylinders and cones. In some cases, the coil may be designed in sections. In other cases the coil may comprise more than one layer of windings. As is well known in the art, care is exercised to substantially avoid direct electrical contact between the induction coil and the porous structures residing within the inner volume of the coil and between the coil and the metallic chamber walls.

The power supply for powering the induction coil is usually located adjacent to the chamber, and power is transmitted to the coil within the chamber via vacuum feedthroughs, such as by water-cooled copper feedthroughs. The specific type of induction power supply, operating frequency range, and other specifications may depend on the types, shapes, dimensions, number of porous preforms to be densified, and other considerations. In some cases, more than one power supply may be employed. For porous carbon preforms, a typical operating frequency or frequencies fall in the range of about a few hundred Hz to over 10 kHz. Typical carbon preform temperatures during densification with carbon are in the range of about 800°C to about 1400°C, and in the inductively-heated thermal-gradient rapid densification method the thermal gradients within one preform may be several hundred degrees Celsius at times during densification.

The number of porous preforms which can be densified simultaneously is not limited in any way, and depends on the types, shapes, dimensions and other attributes of such preforms, as well as on practical considerations of available equipment, space, and so forth. The monitoring and control of the densification process can be performed in real time during densification using the principles, methods and components described in U.S. Patent 5,747,096 (to I. Golecki and D. Narasimhan), which is incorporated herein by reference. Note that the ability to monitor and control the densification rate in real time is a major advantage compared to the lack of real time monitoring and control in isothermal, isobaric CVD/CVI. Other advantages of this rapid densification method, as described in U.S. Patent No. 5,348,774 and the APL paper referenced herein include a much lower quantity of byproducts compared to the quantity typically produced in isothermal, isobaric CVD/CVI, and a correspondingly much higher precursor use efficiency in the rapid densification process. Thus, the aforementioned rapid densification process may be more energy efficient and more environmentally friendly than isothermal, isobaric CVI.

Method 100 may be performed on porous structures having much more complex, non-planar and asymmetrical shapes than the rectangular plates 1 described above. FIG. 3 is a simplified, cross-sectional view of a continuous electrically-conductive assembly, according to another embodiment. Here, approximately C-shaped porous preforms 10 may be connected electrically in pairs, and such pairs further stacked or positioned vertically along a central axis 11. The preform pairs may be surrounded by a correspondingly-shaped (e.g. rectangular, elliptical or circular) induction coil 14. Each pair of preforms 10 may or may not be mechanically connected to a next adjacent pair along the stack. If it is desired to rotate or translate the plurality of preform pairs, then the preform pairs may be interconnected to facilitate mechanical motion of the whole assembly during densification. Such mechanical connection may or may not provide electrical connectivity, i.e. the mechanical interconnecting parts may be electrically insulating.

In another embodiment, complex-shaped, non-electrically continuous porous preforms may be densified according to method 100. For example, the two open ends of a C-shaped porous preform can be electrically connected by electrically-conductive elements 12, as noted briefly above to form the continuous electrically-conductive assembly. In an example, electrically-conductive elements 12, such as a carbon tow or fabric, may be included to form the continuous electrically-conductive assembly to allow rapid, inductively-heated thermal-gradient densification of the preform within a relatively simple-shaped coil.

Referring again to FIG. 1, the induction coil is energized so as to heat the porous structure(s) to densification temperatures in a manner establishing a thermal gradient from inner regions to outer surface regions of the structure(s), where a temperature at the inner region is initially higher than a temperature at the surface region, and the temperature at the inner region causes decomposition of a gaseous precursor chemical compound so as to effect deposition of a solid derived from the decomposition of the compound within and onto the inner porous region, step 108. In this embodiment, the assembly is exposed to the gaseous compound after the thermal gradient has been established to effect deposition of the solid within the porous structure, step 110. In another embodiment, the porous structure(s) may first be exposed to the gaseous compound, prior to being heated.

In accordance with an embodiment, the rapid inductively-heated thermal gradient densification method described in U.S. Patent No. 5,348,774 may be performed at a suitable pressure or in a suitable range of pressures within the chamber during densification. According to an embodiment, the pressure may range from high vacuum to superatmospheric. Typical pressures used in densification of porous carbon preforms with carbon matrix are in a range of about 0.01 Torr to about 760 Torr, and more preferably about 10 Torr to about 760 Torr. The design of the chamber and the design and choice of ancillary equipment, such as pumps, pressure gauges, valves (including throttle valves), mass flow controllers and the like will depend on the specific range of operating conditions. The handling and control of the CVD/CVI chemical precursors depends on the type of chemical compounds used. For example, the flow of compounds which are gaseous at ambient temperature (e.g. at 20°C) can be controlled using ordinary mass flow controllers of various types.

A compound which is liquid at ambient temperatures of about 20° C (e.g. cyclopentane) initially may be flowed into a heated mass-flow controlled gas line, where the compound is heated above its boiling point to form a vapor. The vapor may be flowed through heated tubes into the densification chamber, as described in U.S. Patent No. 5,348,774 and the APL paper. A normally liquid precursor may be advantageous because it can occupy about a thousand times less volume when stored, compared to a normally gaseous precursor. The number of gas/precursor inlets into the densification chamber, and the internal arrangement of precursor distribution within the chamber are not limited in any way.

During the densification, the chemical vapor deposition and infiltration process conditions are monitored and adjusted to reduce densification time and to continue densification of the porous structure(s) until a predetermined mass or density is reached, step 112. For example, the pressure and mass flow rates may be adjusted independently or in tandem, and the power and/or frequency of the induction power supply may be adjusted. Adjustments may affect temperatures within the densifying preforms. According to another embodiment, the assembly can be continuously or periodically rotated within the induction coil during densification, in order to further improve the densification uniformity and overcome possible misalignments in the relative positions of the porous structures or portions thereof. Such rotation can be accomplished by coupling the assembly to a rotary (vacuum) feedthrough controlled from outside the reactor. In another embodiment, the assembly can be continuously or periodically translated vertically, in the axial direction, in one direction, or reciprocally back and forth, within at least a part of the space defined by the induction coil, during densification, to further improve the uniformity of densification and/or to enable densification of preforms which are larger or longer in spatial extent than the optimal region of the coil. Such translation can be accomplished by coupling this assembly to a linear motion (vacuum) feedthrough controlled from outside the reactor. The aforementioned rotation and translation can be combined, if desired, to further improve the densification uniformity and densify larger parts which could not be uniformly densified otherwise within an existing coil. Using the above-described optional rotation and/or translation during densification could result in cost savings in terms of using smaller power supplies and smaller coils.

The predetermined final density for a carbon structure may be in a range of about 1.5 g/cm³ to about 2.0 g/cm³, in an embodiment. In other embodiments, the predetermined final density may be greater or less than the aforementioned range. In any case, the predetermined final density may be selected in order to provide the densified structures with particular values of mechanical, thermal, electrical or other properties for a particular application. Mass, M, and density, p, are related through the equation p = M/V, where V is the volume. The volume of a porous structure or preform may only change slightly during densification, compared to the change in mass, so that the densification process can be equivalently terminated when a structure reaches a predetermined mass.

When the predetermined final mass or density has been reached, the chemical vapor infiltration run is terminated and the densified preforms are allowed to cool. The densified preforms are then removed from the reactor, and excess parts are machined off, step 114. Optionally, final dimensional adjustments may be effected through additional fine machining or grinding to meet required specifications. In some applications, environmentally protective coatings may be applied to protect the densified components from oxidation, erosion or foreign object damage.

Accordingly, a novel method for densifying complex-shaped, asymmetrical porous structures has been provided. By forming an electrically continuous assembly from the porous structures and placing the assembly incorporating the porous structures within an induction coil, the porous structures may be rapidly densified in a manner similar to that by which a single electrically continuous porous structure may be rapidly densified. In addition to enabling the densification of the aforementioned structures, the improved method is relatively simple, uses simple heating coils and available types of process chambers and ancillary components and equipment, and importantly is capable of simultaneously densifying a plurality of such complex-shaped, asymmetrical, variable-thickness structures and much more rapidly than in the prior art.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter, it being understood that various changes may be made in the function and arrangement of elements described in an exemplary embodiment without departing from the scope of the inventive subject matter as set forth in the appended claims.

## Claims

1. A method (100) of densifying a complex-shaped and/or asymmetrical porous structure, the method (100) comprising the steps of:
providing (102) a porous structure having a complex and/or asymmetrical shape;
connecting (104) at least two regions of the porous structure with an electrically-conductive element (3, 12) to form a continuous electrically-conductive assembly in a manner to enable non-contact electromagnetic coupling between the porous structure and an induction coil (5, 14);
establishing (108) a thermal gradient from at least one inner region of the porous structure to at least one outer surface region of the porous structure, where the inner region is at a temperature that is initially higher than a temperature of the outer surface region, and the temperature in the inner region causes decomposition of a gaseous compound so as to effect deposition of a solid derived from the decomposition of the gaseous compound within and onto the inner porous region;
exposing (110) the porous structure to the gaseous compound to effect deposition of the solid within the porous structure of the continuous electrically-conductive assembly; and
continuing (112) the steps of establishing and exposing until the porous structure has a predetermined mass or density.

2. The method (100) of claim 1, wherein the induction coil (5, 14) has a simple and/or symmetrical shape relative to the complex and/or asymmetrical shape of the porous structure.

3. The method (100) of claim 1, wherein the porous structure comprises a porous carbon preform (10).

4. The method (100) of claim 1, wherein the gaseous compound comprises a carbon precursor.

5. The method (100) of claim 1, further comprising the steps of:
stacking a plurality of substantially similar continuous electrically-conductive assemblies to form a stack;
positioning the plurality of substantially similar continuous electrically-conductive assemblies within the induction coil (5, 14);
heating the porous structures in the plurality of substantially similar continuous electrically-conductive assemblies by means of non-contact electromagnetic induction to establish a thermal gradient from at least one inner porous region of at least one of the porous structures to at least one outer surface region of a corresponding porous structure, wherein the thermal gradient and the temperature being substantially similar among substantially all of the porous structures in the stack, and an amount of mass added to each porous structure in the stack being substantially equal.

6. The method (100) of claim 5, wherein the induction coil (5, 14) comprises a right circular cylinder.

7. The method (100) of claim 1, wherein:
the electrically-conductive element (3, 12) comprises a fiber tow and/or fabric comprising a carbon-based material.

8. The method (100) of claim 1, wherein:
the electrically-conductive element (3, 12) comprises a mat and/or porous fibrous element comprising a carbon-based material.

9. The method (100) of claim 1, wherein the step of exposing comprises rotating and/or axially translating the continuous electrically-conductive assembly, while subjecting the continuous electrically-conductive assembly to electromagnetic radiation.
